# EUROPÄISCHE PATENTSCHRIFT

(11) **EP 2 226 269 B1**
(45) Veröffentlichungstag und Bekanntmachung des Hinweises auf die Patenterteilung: **31.08.2011**
(21) Anmeldenummer: 10153400.6
(22) Anmeldetag: 12.02.2010
(51) Int. Cl.: B65D 88/76, E03B 3/03, E03F 11/00

(54) **Flüssigkeitstank aus Kunststoff**
Plastic fluid tank
Réservoir de liquide en plastique

(30) Priorität: 06.03.2009 DE 202009003242 U
(43) Veröffentlichungstag der Anmeldung: 08.09.2010
(73) Patentinhaber: Schütz GmbH & Co. KGaA, 56242 Selters (DE)
(72) Erfinder:
(74) Vertreter: advotec.

(56) Entgegenhaltungen:
- DE-A1- 3 837 235
- DE-U1- 20 105 030
- DE-U1-202006 015 139
- DE-U1-202007 012 188
- NZ-A- 502 429

## Beschreibung

Die Erfindung betrifft Flüssigkeitstanks aus Kunststoff, insbesondere Wassertanks, gemäß dem Oberbegriff des Anspruchs 1.

Aus der DE 38 37 235 ist ein Regenwasserbehälter bekannt, welcher an ein Fallrohr anschließbar ist, wobei ein Regenwasserbehälterverbund aus im Querschnitt kreissegmentförmigem Teilbehältern gebildet werden kann. Die Wandungen der einzelnen Teilbehälter sind jedoch voneinander durch eine Rahmenkonstruktion beabstandet und nicht miteinander in Eingriff gebracht. Des Weiteren sind die Wandungen der Teilbehälter in sich nicht versteift.

Die DE 20105030 beschreibt eine Vorrichtung zur Lagerung von Flüssigkeiten, welche untereinander über Verbindungsglieder ortsfest koppelbar sind. Eine flüssigkeitskommunizierende Verbindung hingegen ist der Entgegenhaltung nicht entnehmbar.

Der Erfindung liegt die Aufgabe zugrunde, einen. Flüssigkeitstank aus Kunststoff zu entwickeln, der sich durch eine hohe Festigkeit auszeichnet und für unterschiedliche Verwendungszwecke geeignet ist.

Diese Aufgabe wird erfindungsgemäß gelöst durch einen Flüssigkeitstank mit den Merkmalen des Patentanspruchs 1.

Die unteransprüche beinhalten vorteilhafte und zweckmäßige Weiterbildungen der Erfindung.

Der erfindungsgemäße Flüssigkeitstank.zeichnet sich durch folgende Vorteile aus:

Durch die in die zylindrischen Mantelabschnitte der aus Kunststoff blasgeformten Tankmodule des Flüssigkeitstanks eingeformten Umfangssicken und Längssicken sowie die parallel zur Zylinderachse verlaufenden Rippen und die diesen angepassten parallel zur Zylinderachse verlaufenden Sicken in den Innenwänden der Tankmodule für den Zusammenbau derselben wird eine hohe Widerstandsfähigkeit der Tankmodule gegenüber der Erdlast bei unterirdischem Einbau und gegenüber der Innendruckbelastung durch die in den Tankmodulen enthaltene Flüssigkeit bei oberirdischer Aufstellung erreicht.

Der vorzugsweise aus drei Tankmodulen bestehende Flüssigkeitstank ist für unterschiedliche Verwendungszwecke geeignet und wird insbesondere als Klärtank für Abwasser und als Sammeltank für Regenwasser eingesetzt. Der als Klärtank für Abwasser verwendete Flüssigkeitstank, der aus drei Tankmodulen besteht, die die für den Abwasserklärprozess erforderlichen Klärkammern bilden, ist preisgünstiger als ein einteilig blasgeformter Tank, der nach dem Blasformen in die für die Klärung des Abwassers erforderliche Anzahl von Behandlungskammern unterteilt werden muss.

Der erfindungsgemäße Flüssigkeitstank ist nachstehend anhand von Zeichnungsfiguren erläutert, die folgendes darstellen:
- Fig. 1: eine perspektivische Darstellung des Flüssigkeitstanks,
- Fig. 2: eine Seitenansicht des Tanks,
- Fig. 3: die Draufsicht des Tanks,
- Fig. 4: einen Längsschnitt des Tanks nach Linie IV-IV der Figur 3,
- Fig. 5: die Draufsicht eines Tankmoduls,
- die Fign.: Seitenansichten des Tankmoduls in Pfeilrichtung VI
- 6 und 7: und VII der Figur 5,
- Fig. 8: die Vorderansicht des Tankmoduls und
- Fig. 9: eine Einzelheit gemäß Ausschnitt IX der Fig. 3 in vergrößerter Darstellung.

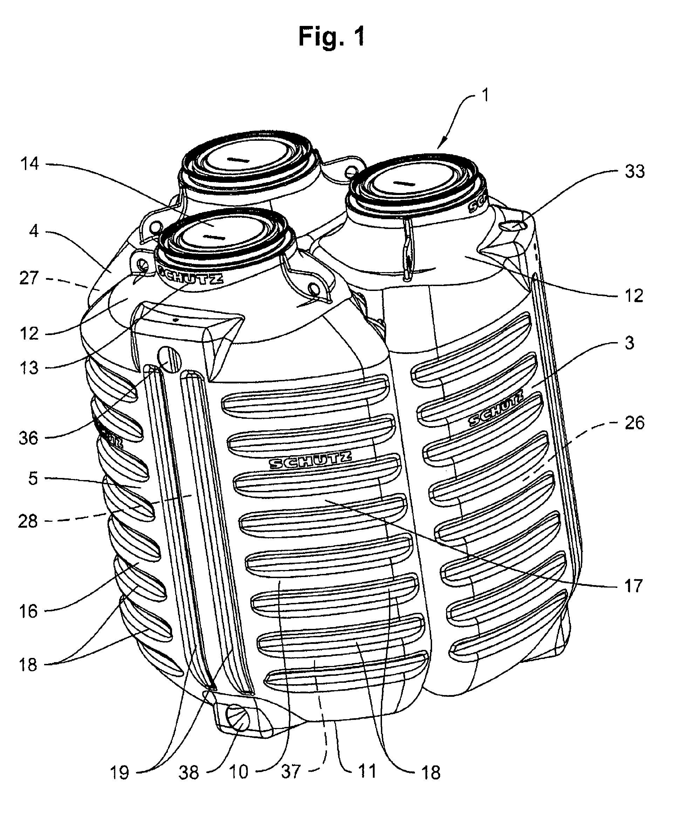

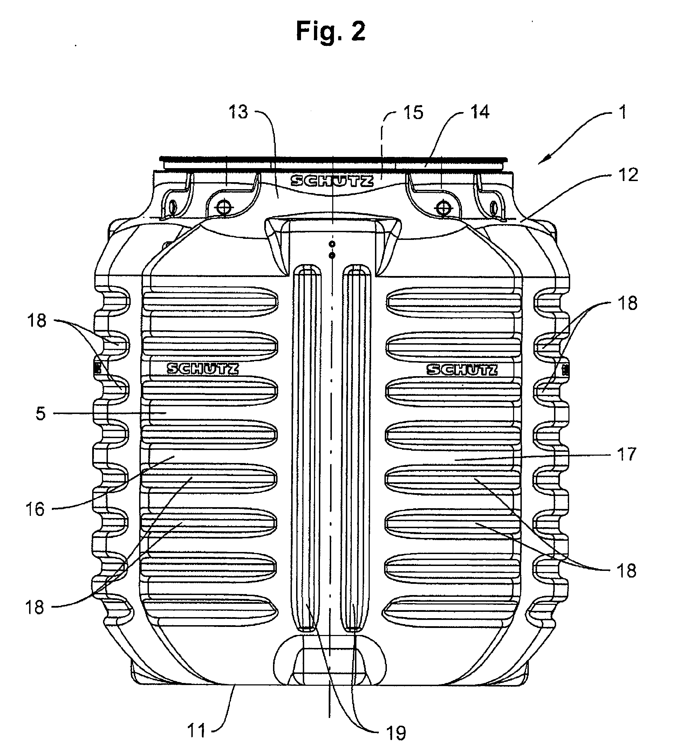

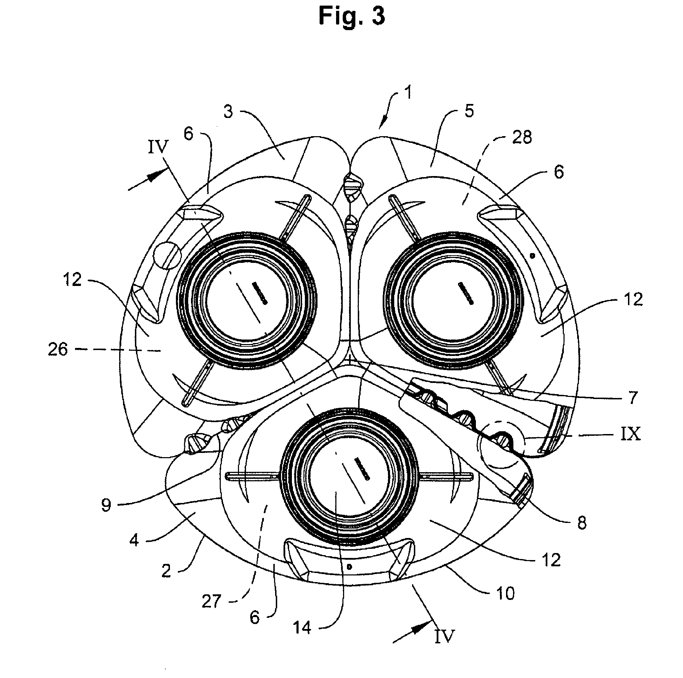

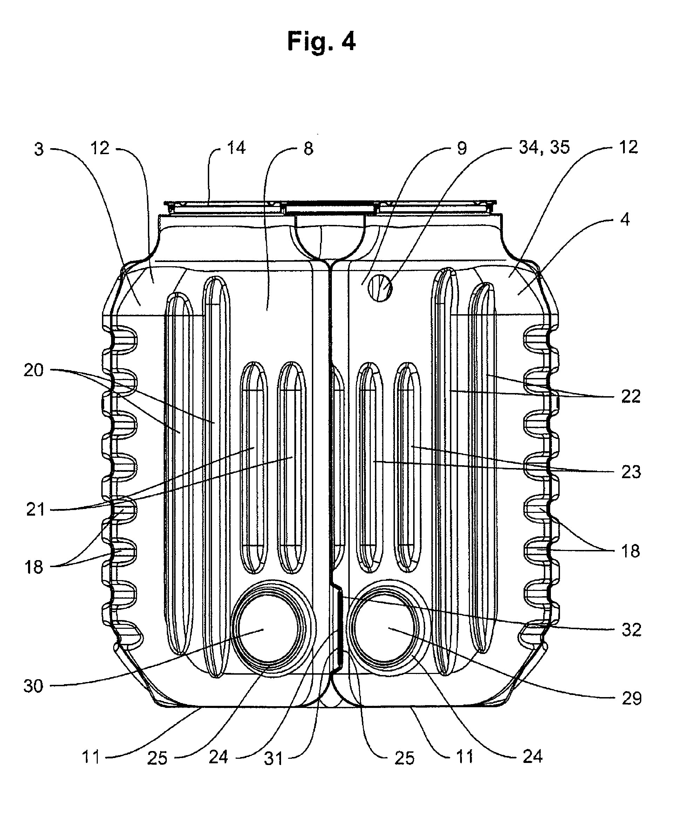

Der Flüssigkeitstank 1 nach den Figuren 1 bis 4, der eine Zylinderform 2 aufweist, ist aus drei gleichen, aus Kunststoff blasgeformten Tankmodulen 3-5 mit einem kreisausschnittsförmigem Querschnitt 6 konzentrisch zu einem Mittelpunkt 7 zusammengesetzt.

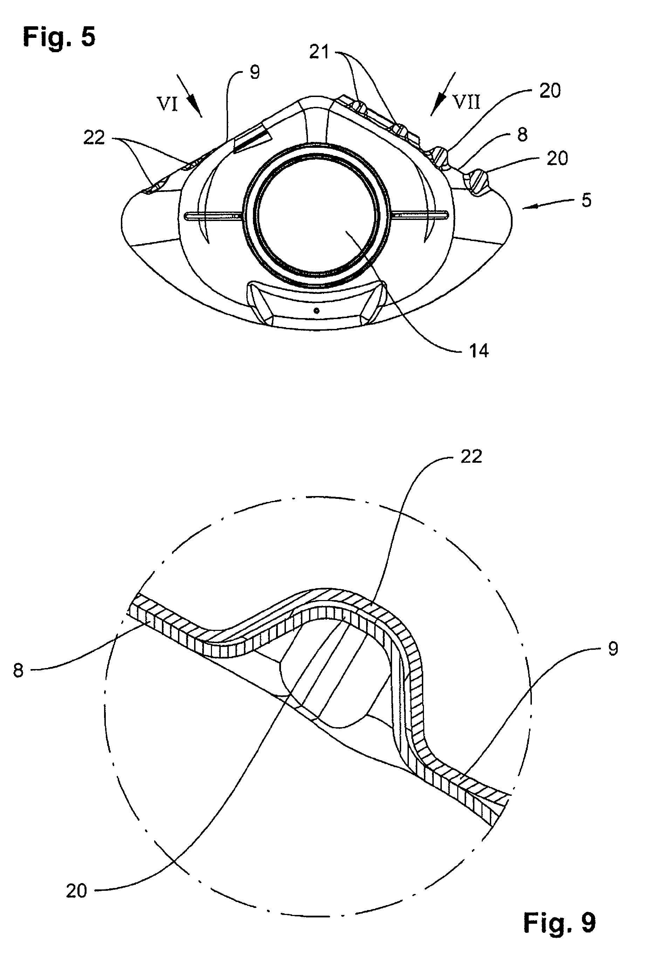

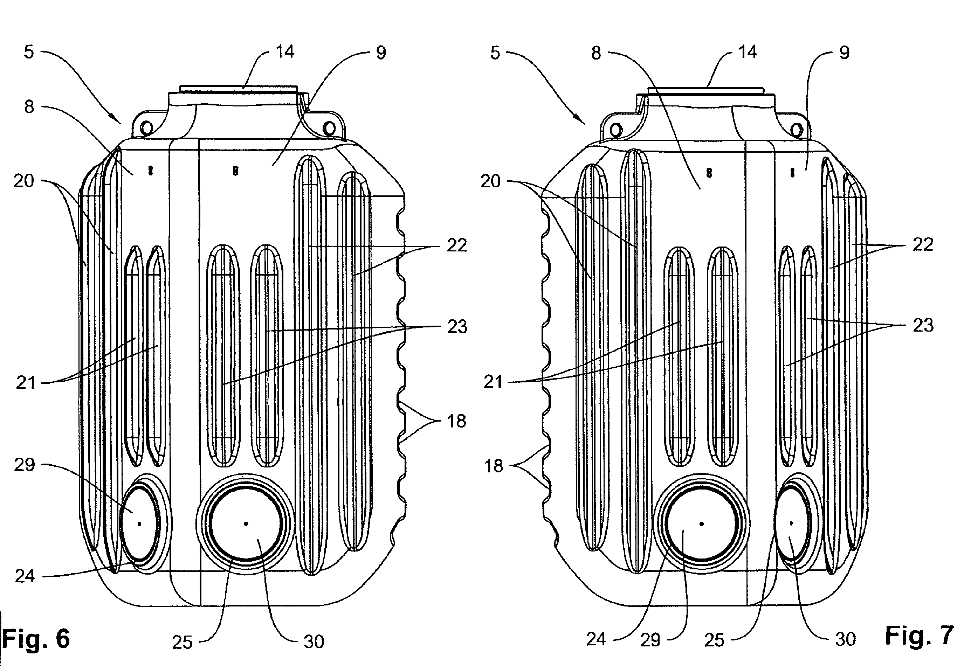

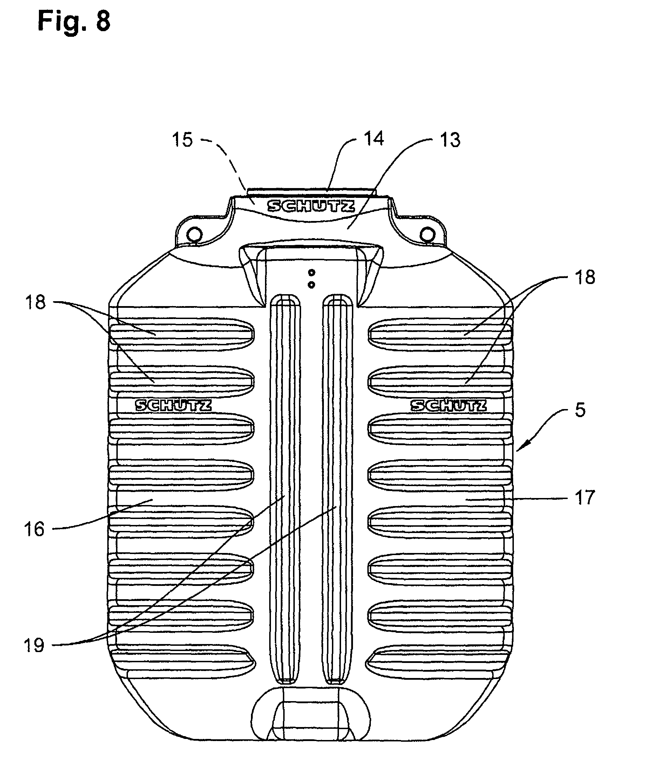

Das in den Figuren 5-8 dargestellte Tankmodul 3 wird durch zwei stumpfwinklig zueinander ausgerichtete Innenwände 8,9 und einen zylindrischen Mantelabschnitt 10, einen unteren Boden 11 sowie einen oberen Boden 12 und einen Dom 13 mit einem durch einen Deckel 14 verschließbaren Mannloch 15 gebildet.

Die Mantelabschnitte 10 der drei Tankmodule 3-5 sind durch zwei beabstandete äußere Reihen 16,17 von horizontalen Umfangssicken 18 sowie durch zwei mittig zwischen den Umfangssicken 18 angeordnete Längssicken 19 versteift.

Die erste Innenwand 8 jedes Tankmoduls 3-5 weist zwei lange und zwei kurze, beabstandete, vertikale Rippen 20,21 und die zweite Innenwand 9 jedes Tankmoduls 3-5 zwei lange und zwei kurze den Rippen 20,21 der ersten Innenwand 8 angepasste, beabstandete Sicken 22,23 für die formschlüssige Verbindung der Tankmodule 3-5 beim Zusammenbau des Flüssigkeitstanks 1 und zur Versteifung der Innenwände 8,9 auf.

Die erste Innenwand 8 der Tankmodule 3-5 ist mit einer flachen, kreisförmigen Ausformung 24 und die zweite Innenwand 9 der Tankmodule mit einer der Ausformung 24 angepassten, flachen, kreisförmigen Einformung 25 im Bereich des unteren Bodens 11 der Tankmodule 3-5 blasgeformt. Zur Verbindung der Tankräume 26-28 der Tankmodule 3-5 im Bereich der unteren Böden 11 werden die Böden 29,30 der Ausformungen 24 und der Einformungen 25 zur Ausbildung von Öffnungen 31,32 in den Innenwänden 8,9 der Tankmodule 3-5 herausgeschnitten und die Wandöffnungen 31,32 von jeweils zwei angrenzenden Innenwänden 8,9 werden beispielsweise durch Verschweißen der zugehörigen Aus- und Einformung 24,25 miteinander verbunden.

Bei dem als Klärtank ausgebildeten Flüssigkeitstank 1 bilden die Tankräume 26-28 der Tankmodule 3-5 drei Klärkammern für das Abwasser. Das erste Tankmodul 3 weist eine Einlauföffnung 33 im oberen Boden 12 für das Abwasser und eine Auslauföffnung 31 im Bereich des unteren Bodens 11 auf. Das zweite Tankmodul 4 ist mit einer an die Auslauföffnung 31 des ersten Tankmoduls 3 angeschlossenen Einlauföffnung 32 im Bereich des unteren Bodens 11 und einem Überlauf mit einer Auslauföffnung 34 im oberen Boden 12 ausgestattet. In den beiden ersten Tankmodulen 3,4 setzen sich die im Abwasser enthaltenen Schwebe- und Schwerstoffe auf dem unteren Boden 11 ab. Das dritte Tankmodul 5 besitzt eine an die Auslauföffnung 34 des zweiten Tankmoduls 4 angeschlossene Einlauföffnung 35 im oberen Boden 12 für das vorgeklärte Wasser und einen Überlauf mit einer Auslauföffnung 36 im oberen Boden 12 für das Klarwasser.
Bei einer weiteren abgeänderten Ausführungsform des vorbeschriebenen Klärtanks entfällt der Überlauf mit der Auslauföffnung 36 im oberen Boden 12 des dritten Tankmoduls 5 und in dem eine Klärkammer bildenden Tankraum 28 des dritten Tankmoduls 5 ist ein Tropfkörper 37 angeordnet, von dem das Klarwasser über eine Auslauföffnung 38 im unteren Boden 11 des dritten Tankmoduls in einen Vorfluter oder ein Bewässerungssystem abläuft.

Der vorbeschriebene Flüssigkeitstank, der aus drei Tankmodulen besteht, kann mit entsprechenden konstruktiven Änderungen als Sammeltank für Regenwasser verwendet werden.

Bei einem derartigen Sammeltank weist das erste Tankmodul 3 eine Einlauföffnung 33 im oberen Boden 12 für das Regenwasser und das dritte Tankmodul 5 einen Überlauf mit einer Auslauföffnung 36 im oberen Boden 12 für das Regenwasser auf, und die Tankräume 26-28 der drei Tankmodule 3-5 sind über Öffnungen 31, 32 in den angrenzenden Innenwänden 8,9 der Tankmodule im Bereich des unteren Bodens 11 derselben miteinander verbunden.

Die vorbeschriebenen verschiedenen Flüssigkeitstanks können unterirdisch eingebaut oder oberirdisch aufgestellt werden.

## Patentansprüche

1. Flüssigkeitstank aus Kunststoff, insbesondere Wassertank, wobei der Tank (1) eine Zylinderform (2) aufweist und aus mindestens drei gleichen Tankmodulen (3-5) mit einem kreisausschnittsförmigen Querschnitt (6), konzentrisch zu einem Mittelpunkt (7) zusammengesetzt ist, und wobei die Tankmodule (3-5) jeweils durch zwei stumpfwinklig zueinander ausgerichtete Innenwände (8,9) und einen zylindrischen Mantelabschnitt (10), einen unteren Boden (11) sowie einen oberen Boden (12) und einen Dom (13) mit einem durch einen Deckel (14) verschliessbaren Mannloch (15) gebildet werden, **dadurch gekennzeichnet, dass** die Mantelabschnitte (10) der Tankmodule (3-5) durch quer zur Zylinderachse verlaufende Umfangssicken (18) und parallel zur Zylinderachse verlaufende Längssicken (19) versteift sind, dass die beiden Innenwände (8,9) jedes Tankmodules (3-5) mit parallel zue Zylinderachse verlaufenden Rippen (20,21) und diesen angepassten parallel zur Zylinderachse verlaufenden Sicken (22,23) für den Zusammenbau der Tankmodule (3-5) und zur Versteifung der Innenwände (8,9) ausgestattet sind, und dass die Tankmodule (3-5) blasgeformt sind.

2. Flüssigkeitstank nach Anspruch 1, **dadurch gekennzeichnet, dass** die zylindrischen Mantelabschnitte (10) der Tankmodule (3-5) zwei beabstandete äussere Reihen (16,17) von Umfangssicken (18) aufweisen, zwischen denen mindestens eine Längssicke (19) angeordnet ist.

3. Flüssigkeitstank nach Anspruch 1 und 2, **dadurch gekennzeichnet, dass** die erste Innenwand (8) jedes Tankmoduls (3-5) zwei lange und zwei kurze, beabstandete, parallel zur Zylinderachse verlaufende Rippen (20,21) und die zweite Innenwand (9) jedes Tankmoduls (3-5) zwei lange und zwei kurze, den Rippen (20,21) der ersten Innenwand (8) angepasste, beabstandete Sicken (22,23) für die formschlüssige Verbindung der Tankmodule (3-5) aufweist.

4. Flüssigkeitstank nach einem der Ansprüche 1 bis 3, **dadurch gekennzeichnet, dass** die erste Innenwand (8) jedes Tankmodules (3-5) mit einer flachen, kreisförmigen Ausformung (24) und die zweite Innenwand (9) jedes Tankmodules (3-5) mit einer der Ausformung (24) angepassten, flachen, kreisförmigen Einformung (25) im Bereich des unteren Bodens (11) der Tankmodule (3-5) blasgeformt sind, dass zur Verbindung der Tankräume (26-28) der Tankmodule (3-5) im Bereich der unteren Böden (11) die Böden (29,30) der Ausformungen (24) und der Einformungen (25) zur Ausbildung von Öffnungen (31,32) in den Innenwänden (8,9) der Tankmodule (3-5) herausgeschnitten sind und dass die Wandöffnungen (31,32) von jeweils zwei angrenzenden Innenwänden (8,9) miteinander verbunden sind.

5. Flüssigkeitstank nach einem der Ansprüche 1 bis 4, **gekennzeichnet durch** eine Ausbildung als Klärtank mit drei **durch** die Tankräume (26-28) der Tankmodule (3-5) gebildeten Klärkammern für Abwasser, wobei ein erstes Tankmodul (3) eine Einlauföffnung (33) im oberen Boden (12) für Abwasser und eine Auslauföffnung (31) im Bereich des unteren Bodens (11), ein zweites Tankmodul (4) eine an die Auslauföffnung (31) des ersten Tankmoduls (3) angeschlossene Einlauföffnung (32) im Bereich des unteren Bodens (11) und einen Überlauf mit einer Auslauföffnung (34) im oberen Boden (12) und ein drittes Tankmodul (5) eine an die Auslauföffnung (34) des zweiten Tankmoduls (4) angeschlossene Einlauföffnung (35) im oberen Boden (12) für das vorgeklärte Wasser und einen Überlauf mit einer Auslauföffnung (36) im oberen Boden (12) für das Klarwasser aufweist.

6. Flüssigkeitstank nach einem der Ansprüche 1 bis 4, **gekennzeichnet durch** eine Ausbildung als Klärtank mit drei **durch** die Tankräume (26-28) der Tankmodule (3-5) gebildeten Klärkammern für Abwasser, wobei ein erstes Tankmodul (3) eine Einlauföffnung (33) im oberen Boden (12) für Abwasser und eine Auslauföffnung (31) im Bereich des unteren Bodens (11), ein zweites Tankmodul (4) eine an die Auslauföffnung (31) des ersten Tankmoduls (3) angeschlossene Einlauföffnung (32) im Bereich des unteren Bodens (11) und einen Überlauf mit einer Auslauföffnung (34) im oberen Boden (12) und ein drittes Tankmodul (5) eine an die Auslauföffnung (34) des zweiten Tankmoduls (4) angeschlossene Einlauföffnung (35) im oberen Boden (12) für das vorgeklärte Wasser sowie einen in den die Klärkammer des dritten Tankmoduls (5) bildenden Tankraum (28) eingesetzten Tropfkörper (37) und eine Auslauföffnung (38) im unteren Boden (11) zur Einleitung des aus dem Tropfkörper (37) ablaufenden Klarwassers in einen Vorfluter, ein Bewässerungssystem oder dergleichen aufweist.

7. Flüssigkeitstank nach einem der Ansprüche 1 bis 4, **gekennzeichnet durch** eine Ausbildung als Sammeltank mit drei Tankmodulen (3-5) für Regenwasser, wobei ein erstes Tankmodul (3) eine Einlauföffnung (33) im oberen Boden (12) für das Regenwasser und ein drittes Tankmodul (5) einen Überlauf mit einer Auslauföffnung (36) für das Regenwasser im oberen Boden (12) aufweist und die Tankräume (26-28) der drei Tankmodule (3-5) über Öffnungen (31,32) in den angrenzenden Innenwänden (8,9) der Tankmodule im Bereich des unteren Bodens (11) derselben miteinander verbunden sind.

8. Flüssigkeitstank nach einem der Ansprüche 1 bis 7, **gekennzeichnet dadurch, dass** er für einen unterirdischen Einbau geeignet ist.

9. Flüssigkeitstank nach einem der Ansprüche 1 bis 7, **gekennzeichnet dadurch, dass** er für eine oberirdische Aufstellung geeignet ist.

## Claims

1. Liquid tank made from plastic, particularly a water tank, wherein the tank (1) has a cylindrical shape (2) and is composed of at least three identical tank modules (3-5) with a circle-sector shaped cross section (6) concentrically to a centre point (7), and wherein the tank modules (3-5) are in each case formed by two inner walls (8, 9) orientated obtusely with respect to one another and a cylindrical case section (10), a lower base (11), as well as an upper base (12) and a dome (13) with a manhole (15) closable by means of a cover (14), **characterised in that** the case sections (10) of the tank modules (3-5) are reinforced by circumferential swages (18) running transversely to the cylinder axis and longitudinal swages (19) running parallel to the cylinder axis, **in that** the two inner walls (8, 9) of each tank module (3-5) are equipped with ribs (20, 21) running parallel to the cylinder axis and swages (22, 23) adapted to the ribs and running parallel to the cylinder axis for the assembly of the tank modules (3-5) and for reinforcing the inner walls (8, 9), and **in that** the tank modules (3-5) are blow moulded.

2. Liquid tank according to Claim 1, **characterised in that** the cylindrical case sections (10) of the tank modules (3-5) have two spaced outer rows (16, 17) of circumferential swages (18), between which at least one longitudinal swage (19) is arranged.

3. Liquid tank according to Claims 1 and 2, **characterised in that** the first inner wall (8) of each tank module (3-5) has two long and two short spaced ribs (20, 21) running parallel to the cylinder axis and the second inner wall (9) of each tank module (3-5) has two long and two short spaced swages (22, 23) adapted to the ribs (20, 21) of the first inner wall (8) for positive connection of the tank modules (3-5).

4. Liquid tank according to any one of Claims 1 to 3, **characterised in that** the first inner wall (8) of each tank module (3-5) is blow moulded with a flat, circular protrusion (24) and the second inner wall (9) of each tank module (3-5) is blow moulded with a flat circular recess (25) adapted to the protrusion (24) in the region of the lower base (11) of the tank modules (3-5), **in that** to connect the tank compartments (26-28) of the tank modules (3-5) in the region of the lower bases (11), the bases (29, 30) of the protrusions (24) and the recesses (25) are cut out for forming openings (31, 32) in the inner walls (8, 9) of the tank modules (3-5) and **in that** the wall openings (31, 32) of two adjoining inner walls (8, 9) in each case are connected to one another.

5. Liquid tank according to any one of Claims 1 to 4, **characterised by** a construction as a purification tank with three purification chambers for waste water formed by the tank compartments (26-28) of the tank modules (3-5), wherein a first tank module (3) has an inlet opening (33) in the upper base (12) for waste water and an outlet opening (31) in the region of the lower base (11), a second tank module (4) has an inlet opening (32) connected to the outlet opening (31) of the first tank module (3) in the region of the lower base (11) and an overflow with an outlet opening (34) in the upper base (12) and a third tank module (5) has an inlet opening (35) connected to the outlet opening (34) of the second tank module (4) in the upper base (12) for the for pre-purified water and an overflow with an outlet opening (36) in the upper base (12) for the treated water.

6. Liquid tank according to any one of Claims 1 to 4, **characterised by** a construction as a purification tank with three purification chambers for waste water formed by the tank compartments (26-28) of the tank modules (3-5), wherein a first tank module (3) has an inlet opening (33) in the upper base (12) for waste water and an outlet opening (31) in the region of the lower base (11), a second tank module (4) has an inlet opening (32) connected to the outlet opening (31) of the first tank module (3) in the region of the lower base (11) and an overflow with an outlet opening (34) in the upper base (12) and a third tank module (5) has an inlet opening (35) connected to the outlet opening (34) of the second tank module (4) in the upper base (12) for the for pre-purified water and also a trickling filter (37) inserted into the tank compartment (28) forming the purification chamber of the third tank module (5) and an outlet opening (38) in the lower base (11) for introducing the treated water draining from the trickling filter (37) into a receiving body of water, an irrigation system or the like.

7. Liquid tank according to any one of Claims 1 to 4, **characterised by** a construction as collector tank with three tank modules (3-5) for rainwater, wherein a first tank module (3) has an inlet opening (33) in the upper base (12) for the rainwater and a third tank module (5) has an overflow with an outlet opening (36) for the rainwater in the upper base (12) and the tank compartments (26-28) of the three tank modules (3-5) are connected to one another by means of openings (31, 32) in the adjoining inner walls (8, 9) of the tank modules in the region of the lower base (11) of the same.

8. Liquid tank according to any one of Claims 1 to 7, **characterised in that** it is suitable for below-ground installation.

9. Liquid tank according to any one of Claims 1 to 7, **characterised in that** it is suitable for above-ground erection.

## Revendications

1. Réservoir à liquide en matière plastique, notamment réservoir à eau, le réservoir (1) présentant une forme cylindrique (2) et étant assemblé à partir d'au moins trois modules de réservoir (3 à 5) identiques, avec une section transversale (6) en forme de secteur de cercle de concentrique au point médian (7) et les modules de réservoir (3 à 5) étant formés chacun par deux parois intérieures (8, 9) orientées sous un angle obtus les unes par rapport aux autres et d'une section d'enveloppe (10) cylindrique, d'un fond inférieur (11), ainsi que d'un fond supérieur (12) et d'une coupole (13), avec un trou d'homme (15) fermable par un couvercle (14), **caractérisé en ce que** les sections d'enveloppe (10) des modules de réservoir (3 à 5) sont renforcées par des moulures périphériques (18) s'étendant à la transversale de l'axe du cylindre et par des moulures longitudinales (19) s'étendant à la parallèle de l'axe du cylindre et **en ce que** les deux parois intérieures (8, 9) de chaque module de réservoir (3 à 5) sont munies de nervures (20, 21) s'étendant à la parallèle de l'axe du cylindre et de moulures (22, 23) qui leur sont adaptées, s'étendant à la parallèle de l'axe du cylindre, pour l'assemblage des modules de réservoir (3 à 5) et pour le renfort des parois intérieures (8, 9) et **en ce que** les modules de réservoir (3 à 5) sont soufflés sur matrice.

2. Réservoir à liquide selon la revendication 1, **caractérisé en ce que** les sections cylindriques d'enveloppe (10) des modules de réservoir (3 à 5) comportent deux rangées extérieures (16, 17) de moulures périphériques (18) entre lesquelles est disposée au moins une moulure longitudinale (19).

3. Réservoir à liquide selon la revendication 1 ou 2, **caractérisé en ce que** la première paroi intérieure (8) de chaque module de réservoir (3 à 5) comporte deux longues et deux courtes nervures (20, 21) écartées, s'étendant à la parallèle de l'axe du cylindre et **en ce que** la deuxième paroi intérieure (9) de chaque module de réservoir (3 à 5) comporte deux longues et deux courtes moulures (22, 23) écartées, adaptées aux nervures (20, 21) de la première paroi intérieure (8) pour la liaison par complémentarité de forme des modules de réservoir (3 à 5).

4. Réservoir à liquide selon l'une quelconque des revendications 1 à 3, **caractérisé en ce que** dans la région du fond inférieur (11) des modules de réservoir (3 à 5) la première paroi intérieure (8) de chaque module de réservoir (3 à 5) est soufflée sur matrice avec une convexité (24) plate circulaire et **en ce que** la deuxième paroi intérieure (9) de chaque module de réservoir (3 à 5) est soufflée sur matrice avec une concavité (25) plate circulaire adaptée à la convexité (24), **en ce que** pour la liaison des espaces de réservoir (26 à 28), des modules de réservoir (3 à 5), dans la région des fonds inférieurs (11), les fonds (29, 30) des convexités (24) et des concavités (25) sont découpées pour former des ouvertures (31, 32) dans les parois intérieures (8, 9) des modules de réservoir (3 à 5) et **en ce que** les ouvertures dans les parois (31, 32) sont reliées les unes aux autres par chaque fois deux parois intérieures (8, 9) adjacentes.

5. Réservoir à liquide selon l'une quelconque des revendications 1 à 4, **caractérisé par** une réalisation sous forme de réservoir de décantation avec trois chambres de décantation pour les eaux usées formées par les espaces de réservoir (26 à 28) des modules de réservoir (3 à 5), un premier module de réservoir (3) comportant une ouverture d'entrée (33) pour les eaux usées dans le fond supérieur (12) et une ouverture d'écoulement (31) dans la région du fond inférieur (11), un deuxième module de réservoir (4) comportant dans la région du fond inférieur (11) une ouverture d'entrée (32) raccordée sur l'ouverture d'écoulement (31) du premier module de réservoir (3) et dans le fond supérieur (12) un trop-plein avec une ouverture d'écoulement (34) et un troisième module de réservoir (5) comportant dans le fond supérieur (12) une ouverture d'entrée (35) raccordée sur l'ouverture d'écoulement (34) du deuxième module de réservoir (4), pour l'eau prédécantée et un trop-plein avec une ouverture d'écoulement (36) dans le fond supérieur (12) pour l'eau claire.

6. Réservoir à liquide selon l'une quelconque des revendications 1 à 4, **caractérisé par** une réalisation en tant que réservoir de décantation avec trois chambres de décantation pour les eaux usées formées par les espaces de réservoir (26 à 28) des modules de réservoir (3 à 5), un premier module de réservoir (3) comportant dans le fond supérieur (12) une ouverture d'entrée (33) pour les eaux usées et une ouverture d'écoulement (31) dans la région du fond inférieur (11), un deuxième module de réservoir (4) comportant dans la région du fond inférieur (11) une ouverture d'entrée (32) raccordée sur l'ouverture d'écoulement (31) du premier module de réservoir (3) et un trop-plein avec une ouverture d'écoulement (34) dans le fond supérieur (12) et un troisième module de réservoir (5) comportant dans le fond supérieur (12) une ouverture d'entrée (35) raccordée sur l'ouverture d'écoulement (34) du deuxième module de réservoir (4) pour l'eau prédécantée, ainsi qu'un lit bactérien (37) inséré dans l'espace de réservoir (28) formant la chambre de décantation du troisième module de réservoir (5) et une ouverture d'écoulement (38) dans le fond inférieur (11) pour l'introduction de l'eau claire s'écoulant du lit bactérien (37) dans un cours d'eau récepteur, un système d'irrigation ou similaire.

7. Réservoir à liquide selon l'une quelconque des revendications 1 à 4, **caractérisé par** une réalisation en tant que réservoir collecteur avec trois modules de réservoir (3 à 5) pour l'eau pluviale, un premier module de réservoir (3) comportant dans le fond supérieur (12) une ouverture d'entrée (33) pour l'eau pluviale et un troisième module de réservoir (5) comportant dans le fond supérieur (12) un trop-plein avec une ouverture d'écoulement (36) pour l'eau pluviale et les espaces de réservoir (26 à 28) des trois modules de réservoir (3 à 5) étant reliés entre eux par l'intermédiaire d'ouvertures (31, 32) dans les parois intérieures (8, 9) adjacentes des modules de réservoir, dans la région du fond inférieur (11) de ces derniers.

8. Réservoir à liquide selon l'une quelconque des revendications 1 à 7, **caractérisé en ce qu'**il est adapté pour une implantation souterraine.

9. Réservoir à liquide selon l'une quelconque des revendications 1 à 7, **caractérisé en ce qu'**il est adapté pour une implantation hors sol.
